# EUROPÄISCHE PATENTSCHRIFT

(11) **EP 1 958 927 B1**
(45) Veröffentlichungstag und Bekanntmachung des Hinweises auf die Patenterteilung: **06.04.2011**
(21) Anmeldenummer: 08101551.3
(22) Anmeldetag: 13.02.2008
(51) Int. Cl.: C04B 38/00, C04B 38/06, B01D 46/00, B01D 46/24, B01D 46/52, F01N 3/021, F01N 3/022, F01N 3/035

(54) **Dieselpartikelfilter mit einem keramischen Filterkörper**
Diesel particulate filter with a ceramic filter body
Filtre à particules diesel doté d'un corps de filtre céramique

(30) Priorität: 15.02.2007 DE 202007002430 U; 08.03.2007 DE 102007011569
(43) Veröffentlichungstag der Anmeldung: 20.08.2008
(73) Patentinhaber: MANN+HUMMEL GmbH, 71638 Ludwigsburg (DE)
(72) Erfinder: Seipler, Dieter, Dr., 71229 Leonberg (DE)

(56) Entgegenhaltungen:
- EP-A- 1 930 060
- WO-A-2006/005668
- WO-A-2008/065077

## Beschreibung

### Technisches Gebiet

Die Erfindung betrifft einen Dieselpartikelfilter mit einem keramischen Filterkörper mit den Merkmalen nach dem Oberbegriff des Anspruchs 1 sowie ein Verfahren zur Herstellung eines entsprechenden Dieselpartikelfilters.

### Stand der Technik

Aus der DE 35 01 182 A1 ist ein Abgasfilter für Dieselmotoren bekannt. Die dort offenbarten keramischen Filterkörper weisen geschichtete, flächige und poröse Filterwände auf, zwischen denen Gaskanäle gebildet sind. Die Gaskanäle sind wechselseitig verschlossen. Ein auf einer Seite in die dorthin offenen Gaskanäle einströmender Abgasstrom wird durch die Verschlussstopfen gezwungen, die porösen Filterwände quer zu ihrer Fläche zu durchströmen. Die auf der gegenüberliegenden Seite befindlichen Abgaskanäle sind in Abströmrichtung offen und geben den filtrierten Abgasstrom frei.

Zur Herstellung der dort gezeigten keramischen Filterkörper werden keine Angaben gemacht. Geometrisch vergleichbare Körper, wie sie beispielsweise von Abgaskatalysatoren bekannt sind, werden durch Extrudieren hergestellt. Dies erfordert einen hohen Werkzeugaufwand für die Formgebung. Die Freiheitsgrade bei der Formgebung des Filterkörpers und insbesondere der Filterwände sowie der Gaskanäle ist durch den Extrusionsprozess eingeschränkt. Eine strömungsoptimale Ausgestaltung des Dieselpartikelfilters ist schwierig.

Die WO 2006/005668 A1 zeigt einen keramischen Abgasfilter für Brennkraftmaschinen, dessen Filterkörper aus keramisch imprägniertem Papier gebildet ist. Je eine glatte und eine wellige imprägnierte Papierbahn werden zu einem Halbzeug unter Bildung von Gaskanälen geschichtet und zu einem Wickelkörper aufgerollt. Die Wellen der gewellten Papierbahn haben über ihre gesamte Länge eine konstante Form, so dass auch die Gaskanäle entlang ihrer Lauflänge einen konstanten Querschnitt aufweisen. Für eine Querdurchströmung der Kanalwände sind die Strömungskanäle mittels Stopfen wechselseitig verschlossen. Eingangsseitig und ausgangsseitig des Dieselpartikelfilters stehen jeweils nur die Hälfte des Gesamtquerschnittes des keramischen Filterkörpers für eine Ein- bzw. Ausströmung zur Verfügung. Wirkungsgrad und Bauvolumen der gezeigten Anordnung sind verbesserungsfähig.

Der Erfindung liegt die Aufgabe zugrunde, einen gattungsgemäßen Dieselpartikelfilter derart weiterzubilden, dass mit geringem Platzbedarf eine verbesserte Abgasnachbehandlung möglich ist.

Diese Aufgabe wird durch einen Dieselpartikelfilter mit den Merkmalen des Anspruchs 1 gelöst.

Der Erfindung liegt des Weiteren die Aufgabe zugrunde, ein Verfahren zur Herstellung eines derartigen Dieselpartikelfilters anzugeben, mit dem eine serientaugliche Herstellung des zugehörigen Filterkörpers unter Berücksichtigung seiner komplexen Geometrie möglich ist.

Diese Aufgabe wird durch ein Verfahren mit den Merkmalen des Anspruchs 14 gelöst.

### Offenbarung der Erfindung

Es wird ein Dieselpartikelfilter mit einem keramischen Filterkörper aus einer keramisch imprägnierten und gesinterten Faserbahn vorgeschlagen, bei dem die durch die keramisch imprägnierte Faserbahn gebildeten Wände der Gaskanäle Öffnungen aufweisen, die die Gaskanäle strömungsleitend miteinander verbinden. Im entsprechenden erfindungsgemäßen Verfahren wird ein Halbzeug des Filterkörpers aus mindestens einer Faserbahn, insbesondere aus Papier, unter Bildung der Gaskanäle geformt. Die mindestens eine Faserbahn wird keramisch imprägniert. An der mindestens einen Faserbahn werden Maßnahmen zur späteren Bildung der Öffnungen getroffen. Das Halbzeug wird derart unter Temperatur gesintert, dass Fasern der mindestens einen Faserbahn freibrennen, und dass das Keramikmaterial zusammensintert, wobei die durchgängig zwischen ihren beiden Oberflächen porösen und gasdurchlässigen Filterwände sowie die Wände der Gaskanäle mit den Öffnungen gebildet werden.

Der aus den Faserbahnen gewickelte oder gestapelte Rohling des Filterkörpers erlaubt verschiedene, weiter unten näher beschriebene vorbereitende Maßnahmen, die spätestens während des Sintervorganges die Öffnungen an gewünschter Stelle erzeugen. Mit einfachen Herstellungsmitteln lassen sich Öffnungen erzeugen, die einen Gasaustausch zwischen benachbarten Gaskanälen ermöglichen. Dies erlaubt es insbesondere im Eingangs- bzw. Ausgangsbereich des Filterkörpers, den vollständigen Kanalquerschnitt sämtlicher Gaskanäle zu nutzen, wodurch die An- und Abströmverhältnisse infolge eines verringerten Strömungswiderstandes und/oder durch gezielte Wirbelbildung verbessert sind.

Weiter sind benachbarte Gaskanäle wechselseitig auf einer Einströmseite des Filterabschnitts und auch auf einer Ausströmseite des Filterabschnitts durch Verschlussstopfen insbesondere aus Keramikmaterial verschlossen, wobei der Filterabschnitt bezogen auf eine Längsrichtung der Gaskanäle zwischen den Verschlussstopfen liegt, und wobei die Gaskanäle bezogen auf die Längsrichtung außerhalb des Filterabschnitts mindestens einen Verwirbelungsabschnitt bilden, in dem die Öffnungen angeordnet sind. Bei dieser Anordnung erfolgt die filtrierende Durchströmung der Filterwände im Wesentlichen nur im Filterabschnitt. Stromauf und/oder stromab des durch die Verschlussstopfen begrenzten Filterabschnittes werden nicht die porösen Filterwände, sondern die Öffnungen in den Gaskanälen für eine Querströmung genutzt. Es entsteht eine gezielte Verwirbelung im An- bzw. Abströmbereich unter Nutzung des Strömungsquerschnittes auch derjenigen Gaskanäle, die ohne solche Öffnungen infolge der Verschlussstopfen von der Durchströmung ausgeschlossen wären.

In bevorzugter Weiterbildung ist der mindestens eine Verwirbelungsabschnitt als ein katalytischer Abschnitt zur katalytischen Reinigung des Abgasstromes ausgebildet. Vorteilhaft weisen im Bereich des mindestens einen mit Öffnungen versehenen katalytischen Abschnitts beide Typen von benachbarten Gaskanälen eine katalytische Beschichtung auf. Mit einem einteilig monolithisch hergestellten Keramikkörper kann in kompakter Bauform sowohl eine Filtrierung als auch eine katalytische Abgasreinigung vorgenommen werden. Der gesamte Querschnitt sämtlicher Gaskanäle, also nicht nur derjenige der einströmseitigen oder ausströmseitigen Gaskanäle, kann mit einer entsprechenden katalytischen Beschichtung infolge der angebrachten Öffnungen auf den Abgasstrom einwirken. Die Anordnung ist wirksam, kompakt und einfach im Aufbau.

In bevorzugter Weiterbildung weist ein ausgangsseitiger katalytischer Abschnitt eine NOX-Speicherbeschichtung auf. Im Abgasstrom enthaltene Stickoxide (NOX) werden über eine bestimmte Betriebsdauer in der NOX-Speicherbeschichtung eingelagert, ohne mit dem Abgasstrom ins Freie zu gelangen. In bestimmten Zeitabständen kann dann eine Regenerierung der Speicherbeschichtung beispielsweise durch einen kurzzeitigen Betrieb mit übermäßig fettem Kraftstoff/Luft-Gemisch und einer daraus folgenden Desorption und Reduktion erfolgen.

Alternativ oder in Kombination kann es zweckmäßig sein, dass ein eingangsseitiger katalytischer Abschnitt eine oxidierende katalytische Beschichtung zur Verminderung des CO- bzw. HC-Gehaltes im Abgasstrom aufweist. In Verbindung mit den vorgenannten Öffnungen und der sich daraus einstellenden Verwirbelung bei maximaler Ausnutzung der verfügbaren Kanalquerschnitte kann neben der filtrierenden Reinigung auch eine wirkungsvolle katalytische Reinigung des Abgasstromes herbeigeführt werden.

In der erfindungsgemäßen Ausführungsform weist mindestens eine Wand aufgebogene Laschen zur Bildung der Öffnungen im Filterkörper auf. Diese Laschen aus keramisch getränktem Fasermaterial sind leicht herzustellen, indem sie teilweise aus dem Fasermaterial ausgeschnitten und aufgebogen werden. Beim Sinterprozess verbrennt das Fasermaterial, während ein Filterkörper mit strömungsleitenden Laschen aus dem gesinterten Keramikmaterial zurückbleibt. Mittels der Laschen lässt sich eine gezielte Beeinflussung der Strömung infolge ihrer Wirkung als aerodynamische Leitelemente erzielen.

In vorteilhafter Ausbildung sind die Öffnungen im Filterkörper durch keramisch nicht imprägnierte Abschnitte der mindestens einen Faserbahn gebildet. Alternativ oder zusätzlich kann es zweckmäßig sein, dass die Öffnungen im Filterkörper durch Ausschnitte in der mindestens einen Faserbahn gebildet sind. Eine weitere vorteilhafte Möglichkeit besteht in der Bildung der Öffnungen durch Auftragungen auf die mindestens eine Faserbahn, die eine keramische Imprägnierung verhindern. In vorgenannter Weise kann mit einfachen Mitteln eine selektive keramische Imprägnierung vorgenommen werden, die die Kontur des späteren Filterkörpers vorgibt. Verbleibende, nicht getränkte Faserabschnitte verbrennen beim Sinterprozess und hinterlassen Öffnungen und Außenkonturen in gewünschter Form, Anzahl und Positionierung. Nahezu beliebige geometrische Ausbildungen sind auf einfachste Weise realisierbar.

In zweckmäßiger Weiterbildung sind die Öffnungen im mindestens einen Verwirbelungsabschnitt mit Abstand zum Filterabschnitt angeordnet. Bevorzugt folgen bezogen auf eine Längsrichtung des Filterkörpers mehrere Öffnungen im Verwirbelungsabschnitt aufeinander. Hierdurch findet ein Gasaustausch zwischen den Gaskanälen des jeweiligen Verwirbelungsabschnittes nicht nur unmittelbar vor bzw. nach dem Filterabschnitt statt, sondern auch mit einem gewissen Abstand zum Filterabschnitt. Insbesondere bei mehreren aufeinander folgenden Öffnungen wird eine gewünschte Verwirbelung und damit Verbesserung der katalytischen Wirkung erzeugt, wobei der Staueinfluss der eingangsseitigen bzw. ausgangsseitigen Verschlussstopfen verringert wird. Kurze Beschreibung der Zeichnungen

Ausführungsbeispiele der Erfindung sind nachfolgend anhand der Zeichnung näher beschrieben. Es zeigen:
- Figur 1: in schematischer Perspektivdarstellung einen Filterabschnitt eines keramischen Filterkörpers aus keramisch imprägnierten, gewickelten Faserbahnen,
- Figur 2: eine schematische Längsschnittdarstellung benachbarter Gaskanäle mit zwischenliegenden Öffnungen für einen ungehinderten Gasaustausch in katalytischen Verwirbelungsabschnitten des erfindungsgemäßen keramischen Filterkörpers,
- Figur 3: eine Schemadarstellung einer Walzanlage zur Formung und Fügung von Faserbahnen zu einem Halbzeug,
- Figur 4: einen aus dem Halbzeug nach Fig. 3 gebildeten Rohling bei der keramischen Imprägnierung in einem Tauchbad,
- Figur 5: eine Schemadarstellung einer Walz- und Rakelanlage zur Imprägnierung von Faserbahnen mit Keramikmaterial, sowie zur Formgebung und Fügung zu einem Halbzeug,
- Figur 6: eine schematische Perspektivdarstellung einer mit der Anordnung nach Figur 5 teilweise imprägnierten, mit Ausschnitten versehenen Faserbahn.

### Ausführungsform(en) der Erfindung

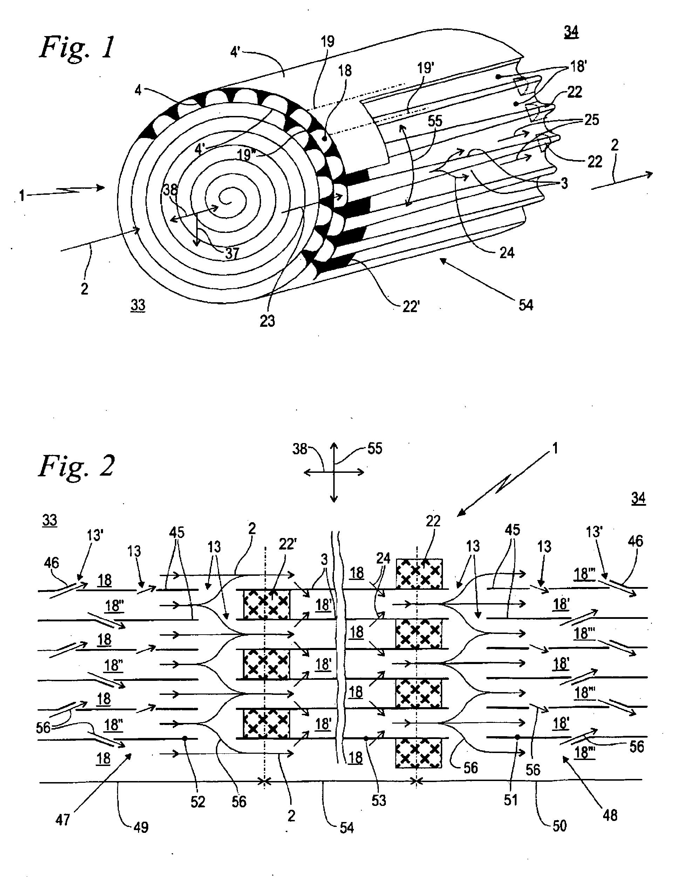

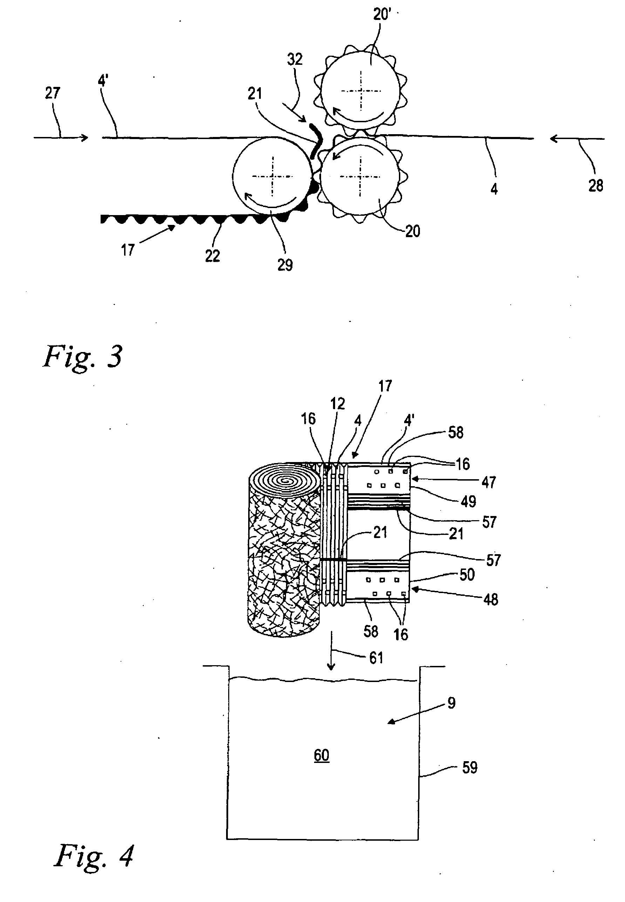

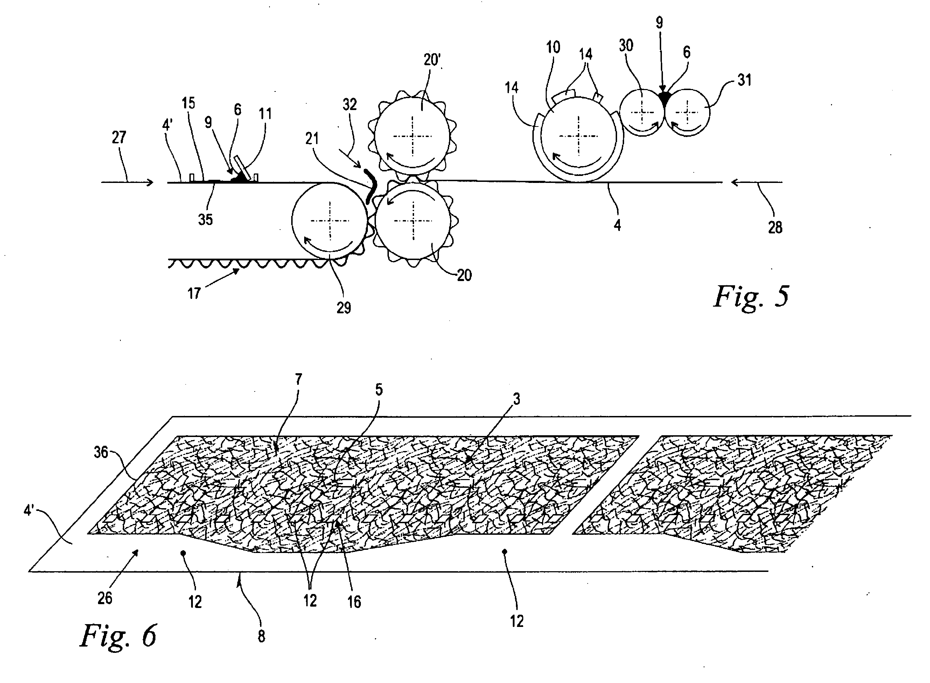

Figur 1 zeigt in schematischer, teilweise geschnittener Perspektivdarstellung einen keramischen Filterkörper 1 im Bereich seines Filterabschnittes 54. Der Filterabschnitt 54 ist Teil eines in Fig. 2 schematisch dargestellten Filterkörpers 1, der wiederum Teil eines nicht näher dargestellten, zur Filtrierung eines Abgasstromes 2 eines Dieselmotors vorgesehenen Dieselpartikelfilters ist. Der Filterkörper 1 ist durch weiter unten im Zusammenhang mit den Figuren 3 bis 6 näher beschriebene, keramisch imprägnierten Faserbahnen 4, 4' gebildet. Die Faserbahnen 4, 4' sind entsprechend der Darstellung nach den Figuren 3 bis 5 zu einem Halbzeug 17 zusammengefügt, welches zu dem näherungsweise zylindrisch ausgeführten Filterkörper 1 nach Fig. 1 aufgewickelt ist. Durch das Aufwickeln der keramisch imprägnierten Faserbahnen 4, 4' zu einem Wickelkörper entsteht eine Schichtungsrichtung, die zu einer Radialrichtung 37 des zylindrischen Filterkörpers 1 identisch ist. Alternativ kann es auch zweckmäßig sein, mehrere gewellte Faserbahnen 4 bzw. Halbzeuge 17 (Figuren 4 und 6) in einer Ebene anzuordnen und stapelartig übereinanderzuschichten.

Es ist eine Durchströmung des Filterkörpers 1 vom Abgasstrom 2 in einer Axialrichtung 38 des Filterkörpers 1 von einer Einströmseite 33 zu einer Ausströmseite 34 vorgesehen. Dazu ist die erste Faserbahn 4 gewellt ausgeführt, während eine zweite Faserbahn 4' im Wesentlichen glatt ist. Der hier gewählte Begriff der Wellenform umfasst Wellen mit gerundetem, beispielsweise sinusförmigem Querschnitt, aber auch solche mit eckigem, beispielsweise dreieckigem, rechteckigem oder trapezförmigem Querschnitt. In Folge der Stapelung bzw. Wickelstruktur liegen bezogen auf die radiale Richtung 37 des Filterkörpers 1 abwechselnd eine gewellte Faserbahn 4 und eine glatte Faserbahn 4' übereinander. Die gewellte Faserbahn 4 ist mit der zweiten, glatten Faserbahn 4' entlang von einer Vielzahl zumindest näherungsweise parallel verlaufender Kontaktlinien 19, 19', 19" verbunden. Durch die Wellenform der Faserbahn 4, die glatte Form der weiteren Faserbahn 4' und die Wickelstruktur entsteht eine Vielzahl von zumindest näherungsweise achsparallel verlaufenden Gaskanälen 18, 18' mit entlang der Axialrichtung 38 konstanter, in der Radialrichtung 37 gemessener Höhe. In einer Umfangsrichtung 55 des Filterkörpers 1 sind abwechselnd je ein Gaskanal 18 und ein Gaskanal 18' vorgesehen. Die Gaskanäle 18 sind zur Einströmseite 33 hin offen und in gegenüberliegender Richtung zur Ausströmseite 34 hin mittels Verschlussstopfen 22 verschlossen. Bezogen auf die Umfangsrichtung 55 liegt zwischen zwei Gaskanälen 18 je ein Gaskanal 18', der zur Einströmseite 33 hin mittels eines Verschlussstopfens 22' verschlossen und zur Ausströmseite 34 hin offen ist. Im Betrieb strömt der Abgasstrom 2 entsprechend einem Pfeil 23 achsparallel in die zur Einströmseite 33 hin offenen Gaskanäle 18 ein. In der Umfangsrichtung 55 angeordnete Seitenwände der durch die gewellte Faserbahn 4 hergestellten keramischen Struktur bilden flächige und poröse Filterwände 3. Der an den Verschlussstopfen 22 aufgestaute Abgasstrom 2 wird in der Umfangsrichtung 55 entsprechend Pfeilen 24 abgelenkt und durchströmt die porösen keramischen Filterwände 3 quer zu ihrer Fläche. Entsprechend den Pfeilen 24 tritt der Abgasstrom 2 durch die Filterwände 3 hindurch in die zur Ausströmseite 34 hin offenen Kanäle 18 ein und strömt aus ihnen entsprechend Pfeilen 25 aus. Beim Durchtritt durch die porösen Filterwände 3 wird der Abgasstrom 2 von mitgeführten Rußpartikeln oder dgl. gereinigt.

Figur 2 zeigt eine perspektivische Längsschnittdarstellung durch einen erfindungsgemäß ausgeführten Filterkörper 1 mit einem mittigen Filterabschnitt 54 und zwei in der Längsrichtung 38 daran beidseitig angrenzenden Verwirbelungsabschnitte 49, 50. Im eingangsseitigen Verwirbelungsabschnitt 49 grenzen in der Umfangsrichtung 55 Gaskanäle 18, 18" und im ausgangsseitigen Verwirbelungsabschnitt 50 Gaskanäle 18' und 18"' wechselseitig aneinander. Im mittigen Filterabschnitt 54 sind bezogen auf die Umfangsrichtung 55 Gaskanäle 18, 18' wechselseitig nebeneinander angeordnet. Die Gaskanäle 18 sind auf der Ausströmseite 34 des Filterabschnitts 54 durch Verschlussstopfen 22 verschlossen, während die ausgangsseitigen Gaskanäle 18' auf ihrer Einströmseite 33 des Filterabschnitts 54 durch Verschlussstopfen 22' verschlossen sind. Die Gaskanäle 18" des eingangsseitigen Verwirbelungsabschnittes 49 sind von den dazu in Längsrichtung fluchtenden ausgangsseitigen Gaskanälen 18' durch die Verschlussstopfen 22' getrennt, während die eingangsseitigen Gaskanäle 18 von den dazu in Längsrichtung fluchtenden Gaskanälen 18"' des ausgangsseitigen Verwirbelungsabschnittes 50 durch die Verschlussstopfen 22 getrennt sind. Der in schematischer Schnittdarstellung in der Längsrichtung 38 und der Umfangsrichtung 55 gezeigte Filterkörper 1 nach Fig. 2 ist einschließlich seiner beiden Verwirbelungsabschnitte 49, 50 entsprechend dem Filterabschnitt 54 nach Fig. 1 etwa zylindrisch aufgewickelt, kann aber auch gestapelt sein.

Bezogen auf die Längsrichtung 38 liegt der Filterabschnitt 54 zwischen den Verschlussstopfen 22, 22', während die beiden Verwirbelungsabschnitte 49, 50 bezogen auf die Längsrichtung 38 außerhalb des Filterabschnittes 54 bzw. außerhalb der Verschlussstopfen 22, 22' liegen. Im eingangsseitigen Verwirbelungsabschnitt 49 sind die in der Umfangsrichtung 55 benachbarten Gaskanäle 18, 18" durch Wände 45 voneinander getrennt, während im ausgangsseitigen Verwirbelungsabschnitt 50 die Gaskanäle 18', 18"' ebenfalls durch Wände 45 voneinander getrennt sind. In beiden Verwirbelungsabschnitten 49, 50 weisen die durch die Faserbahn 4 (Fig. 1) gebildeten Wände 45 eine Anzahl von Öffnungen 13, 13' auf, die die Gaskanäle 18, 18" bzw. die Gaskanäle 18', 18"' strömungsleitend verbinden. Sämtliche Öffnungen 13, 13' der Verwirbelungsabschnitte 49, 50 liegen nicht unmittelbar eingangsseitig bzw. ausgangsseitig des Filterabschnitts 54, sondern weisen bezogen auf eine Längsrichtung 38 des Filterkörpers 1 einen axialen Abstand dazu, d. h. zu den eingangsseitigen Verschlussstopfen 22' bzw. den ausgangsseitigen Verschlussstopfen 22 auf. Außerdem folgen innerhalb zumindest eines Typs von Gaskanälen 18, 18', 18", 18"', hier innerhalb aller Gaskanäle 18, 18', 18", 18"' bezogen auf die Längsrichtung 38 mehrere Öffnungen 13, 13' aufeinander.

Ein Teil der Öffnungen 13 ist als einfache Aussparung in den Wänden 45 ausgebildet, während ein weiterer Teil der Öffnung 13' mit strömungsleitenden Laschen 46 versehen ist. Die Laschen 46 werden aus den weiter unten näher beschriebenen Faserbahnen 4, 4' teilweise ausgestanzt bzw. ausgeschnitten und aus der Ebene der jeweiligen Faserbahn 4, 4' aufgebogen. Infolge ihrer keramischen Imprägnierung und des abschließenden, weiter unten näher beschriebenen Sinterprozesses verbrennt das Fasermaterial der Faserbahnen 4, 4' (Fig. 1), wobei die Laschen 46 in rein keramischer Form zurückblieben.

Durch die Öffnungen 13, 13', ggf. strömungsleitend unterstützt durch die Laschen 46 findet ein verwirbelnder Gasaustausch zwischen den benachbarten Gaskanälen 18, 18" im eingangsseitigen Verwirbelungsabschnitt 49 bzw. zwischen den benachbarten Gaskanälen 18', 18"' im ausgangsseitigen Verwirbelungsabschnitt 50 in folgender Weise statt: Der in Fig. 1 dargestellte Abgasstrom 2 strömt nicht nur durch die eingangsseitigen Gaskanäle 18, sondern auch durch die an den Verschlussstopfen 22' endenden Gaskanäle 18" in den Filterkörper 1 ein. Der anteilige Abgasstrom der eingangsseitigen Gaskanäle 18" wird an den Verschlussstopfen 22' aufgestaut und durch die Öffnungen 13, 13' in die benachbarten eingangsseitigen Gaskanäle 18 eingeleitet. Trotz der Aufstauwirkung der Verschlussstopfen 22' steht nicht nur der Strömungsquerschnitt der eingangsseitigen Gaskanäle 18, sondern auch derjenige der eingangsseitigen Gaskanäle 18" im Verwirbelungsabschnitt 49 zur Verfügung. Demnach sind im eingangsseitigen Verwirbelungsabschnitt 49 zwei Typen von eingangsseitigen Gaskanälen 18, 18" vorhanden. Der erste Typ ist durch die Gaskanäle 18 gebildet, die an den Verschlussstopfen 22' vorbei in den Filterabschnitt 54 hineinlaufen und an den ausgangsseitigen Verschlussstopfen 22 enden. Der weitere Typ ist durch die eingangsseitigen Gaskanäle 18" gebildet, die eingangsseitig des Filterabschnitts 54 an den Verschlussstopfen 22 enden und ihren anteiligen Abgasstrom mittels der Öffnungen 13, 13' an die benachbarten Gaskanäle 18 übergeben. Der eingangsseitige Verwirbelungsabschnitt 49 ist optional als katalytischer Abschnitt 47 ausgebildet, in dem beide Typen der benachbarten Gaskanäle 18, 18" auf ihren Innenwänden eine katalytische Beschichtung in Form einer oxidierenden Katalysatorbeschichtung 52 zur Verminderung des CO- bzw. HC-Gehaltes im Abgasstrom 2 aufweisen. Der auf diese Weise katalytisch nachbehandelte Abgasstrom 2 tritt durch die Gaskanäle 18 in den Filterabschnitt 54 ein, wo er infolge der Aufstauwirkung der Verschlussstopfen 22 entsprechend der Pfeile 24 durch die Filterwände 3 hindurch gedrückt wird und in die benachbarten ausgangsseitigen Gaskanäle 18' austritt.

Auch der ausgangsseitige Verwirbelungsabschnitt 50 weist zwei Typen von Gaskanälen 18', 18"' auf. Der erste Typ ist durch die ausgangseitigen Gaskanäle 18' gebildet, die stromab der Verschlussstopfen 22' beginnen und sowohl durch den Filterabschnitt 54 als auch durch den ausgangsseitigen Verwirbelungsabschnitt 50 zur Ausströmseite 34 hin verlaufen. Der weitere Typ ist durch die ausströmseitigen Gaskanäle 18"' gebildet, die stromab des Filterabschnittes 54 und dessen außenseitiger Verschlussstopfen 22 allein im ausgangseitigen Verwirbelungsabschnitt 50 verlaufen. Um auch den Strömungsquerschnitt der eingangseitig durch die Verschlussstopfen 22 abgetrennten Gaskanäle 18"' zu nutzen, sind die Öffnungen 13, 13', ggf. in Verbindung mit Laschen 46 vorgesehen, wodurch ein Strömungsaustausch der ausgangsseitigen Gaskanäle 18' mit den weiteren Gaskanälen 18"' herbeigeführt wird.

Der ausgangsseitige Verwirbelungsabschnitt 50 ist als ausgangsseitiger katalytischer Abschnitt 48 ausgeführt. Hierbei weisen beide Typen von benachbarten Gaskanälen 18', 18"' eine katalytische Beschichtung an ihren Innenwänden in Form einer NOX-Speicherbeschichtung 51 auf. Dadurch ist die gesamte Innenfläche der Gaskanäle 18' und auch der Gaskanäle 18"' katalytisch wirksam.

Optional weisen die Filterwände 3 des Filterabschnittes 54 noch eine katalytische Beschichtung 53 zur Reduzierung der Zündtemperatur von in den gasdurchlässigen Filterwänden 3 zurückgehaltenen Partikeln auf. Bei einem entsprechenden Verschmutzungsgrad der Filterwände 3 kann der Filterkörper 3 ggf. mit mäßig erhöhter Temperatur betrieben werden, in dessen Folge die eingelagerten, ausgefilterten Partikel verbrannt werden.

Figur 3 zeigt in schematischer Ansicht eine Vorrichtung zur Herstellung eines Halbzeuges 17, das seinerseits zur Herstellung eines Rohlinges für den Filterkörper 1 nach den Fig. 1 und 2 entsprechend der Darstellung nach Fig. 4 vorgesehen ist. Eine erste, zunächst glatte Faserbahn 4 wird entsprechend einem Pfeil 28, einem Paar von gewellten Walzen 20, 20' zugeführt, deren Wellen ineinander kämmen. Die Faserbahn 4 wird durch die ineinander kämmenden Wellen hindurchgeführt, wodurch sie eine wellige Form erhält. Eine weitere, glatte Faserbahn 4' wird entsprechend einem Pfeil 27 der Vorrichtung zugeführt und mittels einer Andruckwalze 29 umgelenkt. Dabei wird die glatte Faserbahn 4' gegen die gewellte Faserbahn 4 gedrückt. Eine dazwischen entsprechend einem Pfeil 32 eingeführte Raupe 21 aus einem keramischen Material bildet später die Verschlussstopfen 22' entsprechend der Darstellung nach den Fig. 1 und 2.

Figur 4 zeigt einen nicht vollständig aufgewickelten, aus dem Halbzeug 17 nach Fig. 3 hergestellten Rohling zur Bildung des Filterkörpers 1 nach den Fig. 1 und 2. In den katalytischen Abschnitten 47, 48 bzw. in den Verwirbelungsabschnitten 49, 50 ist die Faserbahn 4 und/oder die Faserbahn 4' mit Ausschnitten 16 versehen, die später beim Sintern die in Fig. 2 dargestellten Öffnungen 13 bilden. Des Weiteren ist streifenweise ein Material aufgetragen, welches die spätere keramische Imprägnierung der Faserbahn 4, 4' verhindert. Im gezeigten Ausführungsbeispiel sind hierzu verschiedene parallel zueinander verlaufende Haftspuren 57 vorgesehen, mittels derer die beiden Faserbahnen 4, 4' aneinander haften. Die glatte Faserbahn 4' ist an ihren beiden Längskanten noch mit einer weiteren Haftspur 58 versehen, die jedoch nur der vereinfachten Herstellung des Halbzeuges 17 dient, und die bei der Herstellung des Rohlings in nicht dargestellter Weise abgetrennt wird. Zwischen der gewellten Faserbahn 4 und der glatten Faserbahn 4' befindet sich noch die Raupe 21 nach Fig. 3 zur Bildung der Verschlussstopfen 22' (Fig. 1). Auf ihrer der glatten Faserbahn 4' abgewandten Seite der welligen Faserbahn 4 ist angrenzend an den benachbarten Verwirbelungsabschnitt 50 eine weitere Raupe 21 aus keramischem Material aufgetragen, die beim Aufwickeln des Halbzeuges 17 zu dem gezeigten Rohling die späteren ausgangsseitigen Verschlussstopfen 22 (Fig. 1) bildet.

Im Anschluss an das Aufwickeln des Rohlings oder alternativ nach einer Stapelbildung wird der Rohling entsprechend einem Pfeil 61 in einen Behälter 59 mit einem Tauchbad 60 geführt. Das Tauchbad 60 enthält eine Emulsion 9 mit dem Keramikmaterial 6. Der aus den Faserbahnen 4, 4' gebildete Rohling des Filterkörpers 1 (Fig. 1, 2) wird mit dem Keramikmaterial 6 getränkt, bzw. imprägniert. Es erfolgt jedoch nur eine partielle Imprägnierung, da die Ausschnitte 16 und die Haftspuren 57 keramisch nicht imprägnierte, in Fig. 6 vergleichbar dargestellte Abschnitte 12 bilden.

Der auf diese Weise gebildete Rohling des Filterkörpers 1 (Fig. 1, 2) wird anschließend unter Temperatur gesintert, wobei der Filterkörper 1 einschließlich des Filterabschnittes 54, beim Verwirbelungsabschnitt 49, 50 und der Verschlussstopfen 22, 22' (Fig. 2) einteilig monolithisch entsteht. Nicht imprägnierte Fasern, beispielsweise im Bereich der Haftspuren 57, 58 verbrennen dabei zumindest näherungsweise rückstandsfrei und hinterlassen Öffnungen 13 entsprechend der Darstellung nach Fig. 2. In den übrigen Merkmalen und Bezugszeichen stimmt das Ausführungsbeispiel nach den Fig. 3 und 4 mit demjenigen nach den im Folgenden beschriebenen Figuren 5 bis 6 überein.

Figur 5 zeigt eine schematische Darstellung einer weiteren Vorrichtung zur Herstellung des erfindungsgemäßen Filterkörpers 1 (Figur 1, 2). Zwei Beschickungswalzen 30, 31 der Vorrichtung sind achsparallel zueinander angeordnet und liegen bündig nebeneinander. Sie drehen sich gegenläufig, wobei in einem keilförmigen Zwischenraum oberhalb ihrer Berührlinie ein Keramikmaterial 6 bevorratet ist. Das Keramikmaterial 6 kann ein trockenes Pulver aus feingemahlener Keramik sein, welches für eine Trockenimprägnierung der Faserbahn 4 vorgesehen ist. Im gezeigten Ausführungsbeispiel ist mit dem Keramikmaterial 6 eine wässrige Emulsion 9 hergestellt. Anstelle von Wasser kann auch eine andere geeignete Flüssigkeit oder ein Flüssigkeitsgemisch zweckmäßig sein. Als Keramikmaterial 6 kommt bevorzugt Aluminiumoxid, Cordierit, Mullit, Sliciumcarbid und/oder Aluminiumtitanat jeweils für sich alleine oder auch in verschiedenen Kombinationen miteinander in Betracht. Eine weitere Walze 10 ist achsparallel zur Beschickungswalze 30 angeordnet und berührt diese entlang einer Berührlinie. Die Beschickungswalze 30 trägt infolge ihrer durch einen Pfeil angegebenen Drehung die keramische Emulsion 9 zur Walze 10 und rollt die keramische Emulsion 9 auf die Oberfläche der Walze 10 auf. Mittels der Walze 10 wird das Keramikmaterial 6 in das Material der unterhalb in Richtung eines Pfeils 28 entlang geführten Faserbahn 4 eingewalzt. Hierzu liegt die Walze 10 mit Anpressdruck auf der Faserbahn 4 auf. Es wird ein Tränken der Faserbahn 4 mit der Emulsion 9 durchgeführt. Die flächige, durchlässige Faserbahn 4 nimmt dabei das feingemahlene Keramikmaterial 6 innerhalb ihres gesamten Querschnitts auf.

Die endlose Faserbahn 4 durchläuft anschließend in Richtung des Pfeils 28 zwei achsparallel zueinander angeordnete, ineinander kämmende gewellte Walzen 20, 20', wodurch die mit dem Keramikmaterial 6 imprägnierte Faserbahn 4 eine gewellte Form erhält. Die Wellen der gewellten Walzen 20, 20' sind wechselseitig etwa konisch ausgeführt, wodurch auch die Wellen der Faserbahn 4 entsprechend der Darstellung nach Fig. 1 wechselseitig konisch, d.h. mit in der Durchströmungsrichtung sich erweiterndem bzw. verengendem Querschnitt geformt werden. Die beiden gewel-Iten Walzen 20, 20' sind temperiert. Dies führt zu einem leichten Antrocknen, jedoch nicht vollständigen Durchtrocknen der gewellten, mit der Emulsion 9 getränkten Faserbahn 4, wodurch die Wellenform stabilisiert wird.

Eine weitere Faserbahn 4' wird in entgegengesetzter Richtung entsprechend einem Pfeil 27 der gezeigten Vorrichtung zugeführt und läuft um eine Andruckwalze 29 um. Bezogen auf die durch den Pfeil 27 angegebene Bewegungsrichtung liegt vor der Andruckwalze 29 ein Sieb 15 auf der Faserbahn 4' auf. Oberhalb des Siebes 15 ist auf diesem ebenfalls eine wässrige Emulsion 9 mit dem Keramikmaterial 6 bevorratet. Die Emulsion 9 wird mittels einer Rakel 11 unter Druck durch das Sieb hindurch in das Material der Faserbahn 4' hineingestrichen, wodurch eine Tränkung der Faserbahn 4' mit der Emulsion 9 erfolgt. Alternativ kann auch eine Trockenimprägnierung der Faserbahn 4' mit dem Keramikmaterial 6 erfolgen. Auch kann es zweckmäßig sein, eine Imprägnierung der Faserbahn 4' mit einer Walzenanordnung 10, 30, 31 entsprechend der gegenüberliegenden Faserbahn 4 vorzunehmen. Auch für die gewellte Faserbahn 4 kann eine Imprägnierung mittels eines Siebes 15 und einer Rakel 11 zweckmäßig sein.

Die Andruckwalze 29 liegt an der unteren gewellten Walze 20 an. Infolge der gegenläufigen Drehung der Andruckwalze 29 und der gewellten Walze 20 werden die glatte Faserbahn 4' und die gewellte Faserbahn 4 aneinander angedrückt und miteinander verbunden. In Durchlaufrichtung hinter der Walzenanordnung 29, 20 entsteht das Halbzeug 17.

Aus dem Halbzeug 17 wird durch Aufwickeln oder durch Stapeln ein Rohling des Filterkörpers 1 (Fig. 1, 2) gebildet. Unter gleichzeitigem Bezug auf Fig. 1 ist zu erkennen, dass die gewellte Faserbahn 4 an ihren Wellenbergen entlang von Kontaktlinien 19, 19' an der gestrichelt angedeuteten, darüber liegenden glatten Faserbahn 4' anliegt und entlang der Kontaktlinien 19, 19' mit ihr verbunden ist. Die Verbindung kann durch einen geeigneten Leim erfolgen. Im gezeigten Ausführungsbeispiel ist die Verbindung durch die keramische Emulsion 9 in den Faserbahnen 4, 4' hergestellt. Es kann auch zweckmäßig sein, entlang der Kontaktlinien 19, 19' zusätzliche keramische Emulsion 9, ggf. in angedickter Form aufzutragen, um eine Verbindung der beiden Faserbahnen 4, 4' zu erreichen. Im verbundenen Zustand des Halbzeuges 17 sind durch die Wellstruktur der Faserbahn 4 und die glatte Form der Faserbahn 4' die späteren Gaskanäle 18, 18', 18", 18"' (Fig. 2) vorgeformt, wobei Seitenwände der gewellten Faserbahn 4 im Filterabschnitt 54 für die Bildung der späteren Filterwände 3 vorgesehen sind.

Das mit der keramischen Emulsion 9 getränkte Halbzeug 17 wird nach der Imprägnierung entspr. Fig. 5 in feuchtem Zustand, also bei noch nicht durchgetrockneter Emulsion 9, in die Form des späteren Filterkörpers 1 nach Figur 1 aufgewickelt oder auch gestapelt und anschließend getrocknet. Beim Aufwickeln bzw. Stapeln werden Wellentäler der gewellten Faserbahn 4 entlang von Kontaktlinien 19" mit der darunter liegenden glatten Faserbahn 4' verbunden, wodurch neben den Gaskanälen 18 auch die weiteren Gaskanäle 18' in der radialen Richtung 37 und in der Umfangsrichtung 55 des etwa zylindrischen Filterkörpers 1 (Figur 1) geschlossen sind. Die Verbindung an den Kontaktlinien 19" erfolgt in gleicher Weise wie an den Kontaktlinien 19, 19'.

Der auf diese Weise gebildete Filterrohling wird nach dem Trocknungsprozess in einem Sinterofen unter Einwirkung von Temperatur gesintert, wobei das Keramikmaterial 6 zu einem monolithischen Keramikkörper zusammengesintert wird. Bei der hohen Sintertemperatur verbrennt das Material der Faserbahnen 4, 4', wodurch eine bestimmte Porosität des Keramikmaterials 6 erreicht wird. Die Porosität ist derart ausgebildet, dass der Abgasstrom 2 (Figur 1, 2) quer zur Fläche der keramischen Filterwände 3 durch diese hindurchströmen kann.

Der Querschnitt der Gaskanäle 18, 18' verändert sich entlang der Axialrichtung 38, und zwar verengen sich die Querschnitte der eingangsseitigen Gaskanäle 18 von der Einströmseite 33 zur Ausströmseite 34 hin. Umgekehrt erweitern sich die Querschnitte der ausgangsseitigen Gaskanäle 18' von der Einströmseite 33 zur Ausströmseite 34 hin, wobei jedoch bei sämtlichen Gaskanälen 18, 18' die Kanalhöhe konstant bleibt. Dies wird erreicht durch eine Wellenform der Faserbahn 4 mit an der Einströmseite 33 breiten und an der Ausströmseite 34 schmalen Wellenbergen. Im gezeigten Ausführungsbeispiel nach Fig. 1 nimmt die Breite der Wellenberge von der Einströmseite 33 zur Ausströmseite 34 hin linear ab. In Folge der konstanten Kanalhöhe und einer eindimensionalen, etwa konischen Krümmung der Faserbahn 4 ist auch der Querschnittsverlauf etwa linear. Es kann aber auch ein abweichender, nichtlinearer Verlauf insbesondere durch mehrdimensionale räumliche Krümmung der Faserbahn 4 zweckmäßig sein. Alternativ kann auch eine Ausgestaltung der Wellen vorteilhaft sein, bei der die Gaskanäle 18, 18' von der Einströmseite 33 zur Ausströmseite 34 hin einen konstanten Querschnitt aufweisen, wie dies beim Ausführungsbeispiel nach Fig. 2 der Fall ist.

Der entlang von Pfeilen 23 in die Gaskanäle 18 eintretende Abgasstrom 2 dringt entsprechend der Darstellung nach Fig. 1 entlang der gesamten Lauflänge der Gaskanäle 18, 18' innerhalb des Filterabschnittes 54 durch die Filterwände 3 entsprechend Pfeilen 24 hindurch. Dadurch verringert sich der eingangsseitige Volumenstrom 23 im Gaskanal 18 entlang dessen Lauflänge, während sich der ausgangsseitige Volumenstrom 25 im Gaskanal 18' entlang dessen Lauflänge vergrößert. Der vorstehend beschriebene Querschnittsverlauf der Gaskanäle 18, 18' führt dazu, dass die Strömungsgeschwindigkeit innerhalb der Gaskanäle 18, 18' sowie die über die Filterwände 3 gemessene Druckdifferenz zwischen den Gaskanälen 18, 18' entlang deren Lauflänge zumindest näherungsweise konstant sind. Die Filtrierbelastung der Filterwände 3 ist dadurch entlang der Lauflänge der Gaskanäle 18, 18' zumindest näherungsweise konstant.

Figur 6 zeigt in perspektivischer Schemadarstellung die endlose Faserbahn 4'. Das nachfolgend Beschriebene gilt sinngemäß auch für die weitere Faserbahn 4 (Figur 5). Die Faserbahnen 4, 4' bestehen aus Fasern 5. Hierzu kann ein Filz, ein textiles Gewebe oder Gewirke vorgesehen sein. Bevorzugt ist ein offenes, durchlässiges Filterpapier gewählt. Die Faserbahn 4' ist flächig und durchlässig in dem Sinne, dass das feingemahlene Keramikmaterial 6 (Figur 5) zwischen Fasern 5 der Faserbahn 4 eindringen kann. Die Durchlässigkeit der Faserbahn 4 und der Imprägnierungsprozess nach Figur 5 sind derart aufeinander abgestimmt, dass ein Teil der Fasern 5 nach dem Imprägnieren mit dem Keramikmaterial 6 (Figur 5) an beiden gegenüberliegenden Oberflächen 7, 8 der Faserbahn 4 frei liegt. Dies führt beim Freibrennen der Fasern 5 während des Sinterprozesses dazu, dass die gesinterten keramischen Filterwände 3 durchgängig von einer Oberfläche 7 bis zur gegenüberliegenden Oberfläche 8 porös und damit quer zur Fläche der Filterwände 3 gasdurchlässig für den Abgasstrom 2 (Figur 1) sind.

In bestimmten Bereichen kann es zweckmäßig sein, zumindest abschnittsweise eine verringerte Porosität und damit zumindest näherungsweise eine Gasdichtigkeit herbeizuführen. Beispielsweise kann der Filterkörper 1 (Figur 1) im Bereich der glatten Faserbahn 4' eine derart geringe Porosität aufweisen, dass er im technischen Sinne des Filtriervorganges praktisch gasundurchlässig ist, während eine spürbare Gasdurchlässigkeit nur im Bereich der gewellten Faserbahn 4 gewünscht wird. In diesem Falle erfolgt neben der tränkenden Imprägnierung der Faserbahn 4' auch eine geschlossene Oberflächenbeschichtung mit dem Keramikmaterial 6 (Figur 5) an zumindest einer der beiden Oberflächen 7, 8, ohne dass dort die Fasern 5 freiliegen. In diesem Falle entsteht beim Sintern ein geschlossener Keramikkörper, der im Bereich der Oberfläche 7, 8 kaum porös und damit im technischen Sinne gasundurchlässig ist. Die Einstellung der Gasdurchlässigkeit bzw. Gasdichtigkeit kann auch durch entsprechende Einstellung des Keramikmaterials 6 herbeigeführt bzw. unterstützt werden. Insbesondere ist eine solche geschlossene, im Wesentlichen gasundurchlässige keramische Imprägnierung für den Bereich der katalytischen Abschnitte 47, 48 bzw. Verwirbelungsabschnitte 49, 50 (Fig. 2) vorgesehen.

Es kann zweckmäßig sein, die Faserbahnen 4, 4' als unbeschnittenes Endlosmaterial vollflächig mit dem Keramikmaterial 6 (Figur 5) zu imprägnieren. Nicht imprägnierte Abschnitte 12 können dabei beispielsweise durch Ausstanzung von Ausschnitten 16 zur späteren Bildung von Öffnungen 13 (Fig. 2) oder durch eine Beschneidung eines begrenzten Flächengebildes 36 an dessen Randbereich 26 gebildet werden. Im gezeigten Ausführungsbeispiel nach Figur 6 sind nicht imprägnierte Abschnitte 12 vorgesehen, die selektiv von einer Imprägnierung mit dem Keramikmaterial 6 ausgenommen werden; es erfolgt also nur eine partielle keramische Imprägnierung der Faserbahnen 4, 4'. Ein Teil der nicht imprägnierten Abschnitte 12 wird zur späteren Bildung der Öffnungen 13 (Figur 2) von der Imprägnierung ausgenommen. Ein weiterer nicht imprägnierter Abschnitt 12 ist durch den Randbereich 26 gebildet, der das begrenzte Flächengebilde 36 umgibt. Das begrenzte Flächengebilde 36 weist die Kontur auf, die zum Wickeln des Filterkörpers 1 nach den Figuren 1, 2 erforderlich ist. Das Flächengebilde 36 kann durch Beschneiden der Faserbahn 4 insbesondere durch Ausstanzen der Umfangskontur des Flächengebildes 36 sowie durch Ausstanzen der Ausschnitte 16 hergestellt werden. Es kann auch zweckmäßig sein, auf ein Ausstanzen der Ausschnitte 16 zu verzichten und lediglich die zugehörigen Abschnitte 12 von der Imprägnierung mit dem Keramikmaterial 6 (Figur 5) auszunehmen. Dies erfolgt in weiter unten näher beschriebener Weise. Des Weiteren werden in Fig. 2 dargestellte Laschen 46 teilweise ausgestanzt und aus der Ebene der Faserbahn 4, 4' aufgebogen, um Öffnungen 13' nach Fig. 2 zu erzeugen. Alternativ oder zusätzlich kann es zweckmäßig sein, eine die keramische Imprägnierung eines Abschnittes 12 verhindernde Auftragung vergleichbar beispielsweise zu den Haftspuren 57, 58 nach Fig. 4 aufzubringen.

Die nur abschnittsweise imprägnierte und/oder beschnittenen Faserbahnen 4, 4' werden in vorstehend beschriebener Weise zu dem Halbzeug 17 gefügt, welches anschließend zu einem Rohling des Filterkörpers 1 nach den Fig. 1, 2 geformt wird. Die imprägnierten Bereiche der Faserbahnen 4, 4' nehmen dabei die Gestalt des zu bildenden Filterkörpers 1 (Fig. 1, 2) an. Beim abschließenden Sinterprozess verbrennen dann die nicht beschnittenen und nicht imprägnierten Abschnitte 12 vollständig und hinterlassen den Filterkörper 1 in seiner nach den Fig. 1 und 2 vorgesehenen Form einschließlich der Öffnungen 13, 13', Laschen 46 und Verschlussstopfen 22, 22' (Figur 2) als einteiligen monolithischen Körper.

Der Darstellung nach Figur 5 ist zu entnehmen, dass die Walze 10 eine Oberflächenstrukturierung 14 aufweist. Diese entspricht in ihrer Form der Kontur des Flächengebildes 36 nach Figur 6. Die keramische Emulsion 9 wird nur durch die erhabenen Flächen der Oberflächenstrukturierung 14 unter Druck in die Faserbahn 4 eingewalzt. In zwischenliegenden, in radialer Richtung zurückversetzten Bereichen der Oberflächenstrukturierung 14 kann keine Imprägnierung mit dem Keramikmaterial 6 erfolgen, so dass die Faserbahn 4 analog zur Faserbahn 4' nach Figur 6 nur teilweise und unter Bildung der nicht imprägnierten Abschnitte 12 mit dem Keramikmaterial 6 imprägniert wird.

Eine alternative Form der Herstellung von nicht imprägnierten Abschnitten 12 in der Faserbahn 4' ergibt sich aus der Darstellung nach Figur 5 im Bereich des Siebes 15. Das Sieb 15 ist vergleichbar zum Siebdruckverfahren mit schematisch angedeuteten Abdeckungen 35 versehen. Die Abdeckungen 35 entsprechen in ihrer Kontur der Form der nicht imprägnierten Abschnitte 12 nach Figur 6. Beim Aufstreichen der keramischen Emulsion 9 unter Druck mittels der Rakel 11 verhindern die Abdeckungen 35, ggf. auch die Ausstanzungen bzw. Ausschnitte 16 (Fig. 6) partiell eine Tränkung und bilden die nicht imprägnierten Abschnitte 12.

Der Darstellung nach Figur 5 ist noch zu entnehmen, dass vor der Zusammenfügung der beiden Faserbahnen 4, 4' Raupen 21 aus keramischem Material auf die gewellte Faserbahn 4 entsprechend einem Pfeil 32 aufgebracht werden. Die keramischen Raupen 21 werden zwischen den beiden Faserbahnen 4, 4' eingequetscht und bilden später die Verschlussstopfen 22 nach den Figuren 1 und 2. Analog zur Darstellung nach Fig. 4 wird noch eine weitere Raupe 21 auf das Halbzeug 17 aufgetragen, um beim Wickeln oder Stapeln des Rohlings (Fig. 4) die weiteren Verschlussstopfen 22 (Fig. 1, 2) zu erzeugen. Für die wechselseitige Anordnung der Verschlussstopfen 22, 22' nach Figur 1 kann es zweckmäßig sein, die Raupen 21 unterbrochen aufzubringen. Für bestimmte Anwendungsfälle kann es auch zweckmäßig sein, die Verschlussstopfen 22, 22' in Umfangsrichtung durchgängig anzuordnen, wobei dann auch die zugeordneten Raupen 21 durchgängig aufgebracht werden. Die Raupen 21 bestehen bei den Fig. 3, 4 und 5 aus einem feuchten, weichen keramischen Material und werden gemeinsam mit den Faserbahnen 4, 4' getrocknet und anschließend gesintert, wodurch ein monolithischer, keramischer Filterkörper 1 nach den Figuren 1 oder 2 entsteht.

## Patentansprüche

1. Dieselpartikelfilter, umfassend einen keramischen Filterkörper (1) aus einem Keramikmaterial (6) zur Filtrierung eines Abgasstromes (2) eines Dieselmotors, wobei der Filterkörper (1) Gaskanäle (18, 18') aufweist, die in einem Filterabschnitt (54) mit flächigen und porösen Filterwänden (3) versehen sind, wobei die Filterwände (3) zur Durchströmung mit dem Abgasstrom (2) quer zur ihrer Fläche vorgesehen sind, wobei der Filterkörper (1) aus mindestens einer keramisch imprägnierten Faserbahn (4, 4'), insbesondere Papier, unter Bildung der Gaskanäle (18, 18') geformt und derart unter Temperatur durch Sintern gebildet ist, dass Fasern (5) des Fasermaterials freigebrannt sind, und dass das Keramikmaterial (6) unter Bildung der durchgängig zwischen ihren beiden Oberflächen (7, 8) porösen und gasdurchlässigen Filterwände (3) zusammengesintert ist, wobei durch die keramisch imprägnierte Faserbahn (4, 4') gebildete Wände (45) der Gaskanäle (18, 18', 18", 18"') Öffnungen (13, 13') aufweisen, die die Gaskanäle (18, 18') strömungsleitend miteinander verbinden, wobei benachbarte Gaskanäle (18, 18') wechselseitig auf einer Einströmseite (33) des Filterabschnitts (54) und auf einer Ausströmseite (34) des Filterabschnitts (54) durch Verschlussstopfen (22, 22'), insbesondere aus Keramikmaterial, verschlossen sind, wobei der Filterabschnitt (54) bezogen auf eine Längsrichtung (38) der Gaskanäle (18, 18') zwischen den Verschlussstopfen (22, 22') liegt, und wobei die Gaskanäle (18, 18', 18", 18"') bezogen auf die Längsrichtung (38) außerhalb des Filterabschnitts (54) mindestens einen Verwirbelungsabschnitt (49, 50) bilden, in dem die Öffnungen (13) angeordnet sind, **dadurch gekennzeichnet, dass** mindestens eine Wand (45) aufgebogene Laschen (46) zur Bildung der Öffnungen (13') im Filterkörper (1) aufweist.

2. Dieselpartikelfilter nach Anspruch 1, **dadurch gekennzeichnet, dass** der mindestens eine Verwirbelungsabschnitt (49, 50) als katalytischer Abschnitt (47, 48) zur katalytischen Reinigung des Abgasstromes (2) ausgebildet ist.

3. Dieselpartikelfilter nach Anspruch 2, **dadurch gekennzeichnet, dass** im Bereich des mindestens einen mit Öffnungen (13) versehenen katalytischen Abschnitts (47, 48) beide Typen von benachbarten Gaskanälen(18, 18"; 18', 18'") eine katalytische Beschichtung aufweisen.

4. Dieselpartikelfilter nach Anspruch 2 oder 3, **dadurch gekennzeichnet, dass** ein ausgangsseitiger katalytischer Abschnitt (48) eine NOX-Speicherbeschichtung (51) aufweist.

5. Dieselpartikelfilter nach einem der Ansprüche 1 bis 4, **dadurch gekennzeichnet, dass** ein eingangsseitiger katalytischer Abschnitt (47) eine oxydierende Katalysatorbeschichtung (52) zur Verminderung des CO- bzw. HC-Gehaltes im Abgasstrom 2 aufweist.

6. Dieselpartikelfilter nach einem der Ansprüche 1 bis 5, **dadurch gekennzeichnet, dass** die Öffnungen (13) im Filterkörper (1) durch keramisch nicht imprägnierte Abschnitte (12) der mindestens einen Faserbahn (4, 4') gebildet sind.

7. Dieselpartikelfilter nach einem der Ansprüche 1 bis 6, **dadurch gekennzeichnet, dass** die Öffnungen (13) im Filterkörper (1) durch Ausschnitte (16) in der mindestens einen Faserbahn (4, 4') gebildet sind.

8. Dieselparükelfilter nach einem der Ansprüche 1 bis 7, **dadurch gekennzeichnet, dass** die Öffnungen (13) im Filterkörper (1) durch die keramische Imprägnierung verhindernden Auftragungen auf die mindestens einen Faserbahn (4, 4') gebildet sind.

9. Dieselpartikelfilter nach einem der Ansprüche 1 bis 8, **dadurch gekennzeichnet, dass** die Öffnungen (13, 13') im mindestens einen Verwirbelungsabschnitt (49, 50) mit Abstand zum Filterabschnitt (54) angeordnet sind.

10. Dieselpartikelfilter nach einem der Ansprüche 1 bis 9, **dadurch gekennzeichnet, dass** bezogen auf eine Längsrichtung (38) des Filterkörpers (1) mehrere Öffnungen (13, 13') im Verwirbelungsabschnitt (49, 50) auf einander folgen.

11. Dieselpartikelfilter nach einem der Ansprüche 1 bis 10, **dadurch gekennzeichnet, dass** der Filterkörper (1) einschließlich des Filterabschnitts (54), des mindestens einen Verwirbelungsabschnitts (49, 50) und der Verschlussstopfen (22, 22') einteilig monolithisch durch sintern hergestellt ist.

12. Verfahren zur Herstellung eines Dieselpartikelfilters, wobei der Dieselpartikelfilter einen keramischen Filterkörper (1) aus einem Keramikmaterial (6) zur Filtrierung eines Abgasstromes (2) eines Dieselmotors umfasst, wobei der Filterkörper (1) Gaskanäle (18, 18', 18", 18"') aufweist, die in einem Filterabschnitt (54) mit flächigen und porösen Filterwänden (3) versehen sind, wobei die Filterwände (3) zur Durchströmung mit dem Abgasstrom (2) quer zur ihrer Fläche vorgesehen sind, und wobei Wände (45) der Gaskanäle (18, 18', 18", 18"') Öffnungen (13, 13') aufweisen, die die Gaskanäle (18, 18') strömungsleitend miteinander verbinden, wobei die Öffnungen (13') im Filterkörper (1) durch aufgebogene Laschen (46) der mindestens einen Wand (45) gebildet werden, umfassend folgende Verfahrensschritte:
- Ein Halbzeug (17) des Filterkörpers (1) wird aus mindestens einer Faserbahn (4, 4'), insbesondere aus Papier, unter Bildung der Gaskanäle (18, 18') geformt;
- Die mindestens eine Faserbahn (4, 4') wird keramisch imprägniert;
- An der mindestens einen Faserbahn (4, 4') werden zur späteren Bildung der Öffnungen (13, 13') im Filterkörper (1) Abschnitte (12) der mindestens einen Faserbahn (4, 4') keramisch nicht imprägniert oder es wird die mindestens eine Faserbahn (4, 4') mit Ausschnitten (16) versehen oder es werden Auftragungen auf die mindestens eine Faserbahn (4, 4') aufgebracht, durch die die keramische Imprägnierung verhindert wird; die Laschen (46) werden teilweise ausgestanzt und aus der Ebene der Faserbahn (4, 4') aufgebogen;
- Das Halbzeug (17) wird derart unter Temperatur gesintert, dass Fasern (5) der mindestens einen Faserbahn (4, 4') freibrennen, und dass das Keramikmaterial (6) zusammensintert, wobei die durchgängig zwischen ihren beiden Oberflächen (7, 8) porösen und gasdurchlässigen Filterwände (3) sowie die Wände (45) der Gaskanäle (18, 18', 18", 18"') mit den Öffnungen (13, 13') gebildet werden.

13. Verfahren nach Anspruch 12, **dadurch gekennzeichnet, dass** der Filterkörper (1) einschließlich des Filterabschnitts (54), des mindestens einen Verwirbelungsabschnitts (49, 50) und der Verschlussstopfen (22, 22') einteilig monolithisch durch sintern hergestellt wird.

## Claims

1. Diesel particulate filter, comprising a ceramic filter body (1) made of ceramic material (6) for filtering an exhaust-gas flow (2) of a diesel engine, the filter body (1) featuring gas channels (18, 18') which are provided, in a filter section (54), with plane and porous filter walls (3), the filter walls (3) being intended for being flowed through by the exhaust-gas flow (2) transversally to their surface, the filter body (1) being formed of at least one ceramically impregnated fiber web (4, 4'), in particular paper, by forming the gas channels (18, 18') and by sintering it under temperature such that fibers (5) of the fiber material are burned free and that the ceramic material (6) is sintered by forming the end-to-end porous and gas-permeable filter walls (3) between its two surfaces (7, 8), the walls (45) of the gas channels (18, 18', 18", 18"') formed by the ceramically impregnated fiber web (4, 4') featuring openings (13, 13') which connect the gas channels (18, 18') fluidically with each other, adjacent gas channels (18, 18') being closed alternately at an inflow side (33) of the filter section (54) and at an outflow side (34) of the filter section (54) by plugs (22, 22') made in particular of ceramic material, the filter section (54) being located, in relation to a longitudinal direction (38) of the gas channels (18, 18'), between the plugs (22, 22'), and the gas channels (18, 18', 18", 18"') forming, in relation to the longitudinal direction (38), outside of the filter section (54) at least one swirl section (49, 50) where the openings (13) are disposed, **characterized in that** at least one wall (45) features bent-up flaps (46) for forming the openings (13) in the filter body (1).

2. Diesel particulate filter according to claim 1, **characterized in that** the at least one swirl section (49, 50) is designed as catalytic section (47, 48) for a catalytic cleaning of the exhaust-gas flow (12).

3. Diesel particulate filter according to claim 2, **characterized in that** in the area of the at least one catalytic section (47, 48) provided with openings (13) both types of adjacent gas channels (18, 18', 18", 18"') feature a catalytic coating.

4. Diesel particulate filter according to claim 2 or 3, **characterized in that** an outflow-sided catalytic section (48) features a NO_{X} storage coating (51).

5. Diesel particulate filter according to one of the claims 1 to 4, **characterized in that** an inflow-sided catalytic section (47) features an oxidizing catalyst coating (52) for reducing the CO and/or HC concentration in the exhaust-gas flow (2).

6. Diesel particulate filter according to one of the claims 1 to 5, **characterized in that** the openings (13) in the filter body (1) are formed by ceramically non-impregnated sections (12) of the at least one fiber web (4, 4').

7. Diesel particulate filter according to one of the claims 1 to 6, **characterized in that** the openings (13) in the filter body (1) are formed by cut-outs (16) of the at least one fiber web (4, 4').

8. Diesel particulate filter according to one of the claims 1 to 7, **characterized in that** the openings (13) in the filter body (1) are formed by coatings preventing ceramic impregnation of the at least one fiber web (4, 4').

9. Diesel particulate filter according to one of the claims 1 to 8, **characterized in that** the openings (13, 13') in the at least one swirl section (49, 50) are disposed at a certain distance to the filter section (54).

10. Diesel particulate filter according to one of the claims 1 to 9, **characterized in that**, in relation to a longitudinal direction (38) of the filter body (1), several openings (13, 13') in the swirl section (49, 50) follow each other.

11. Diesel particulate filter according to one of the claims 1 to 10, **characterized in that** the filter body (1) including the filter section (54) of the at least one swirl section (49, 50) and the plug (22, 22') is made in one-piece monolithically through sintering.

12. Method for manufacturing a diesel particulate filter, the diesel particulate filter comprising a ceramic filter body (1) made of ceramic material (6) for filtering an exhaust-gas flow (2) of a diesel engine, the filter body (1) featuring gas channels (18, 18', 18", 18"') which are provided with plane and porous filter walls (3) in one filter section (54), the filter walls (3) being intended to be flowed through perpendicularly to their surface by the exhaust-gas flow (2), and the walls (45) of the gas channels (8, 8', 8", 8"') featuring openings (13, 13') which connect the gas channels (18, 18') fluidically with each other, the openings (13') in the filter body (1) being formed by bent-up flaps (46) of the at least one wall (45), comprising the following process steps:
- A semi-finished product (17) of the filter body (1) is formed of at least one fiber web (4, 4'), in particular paper, by forming the gas channels (18, 18');
- The at least one fiber web (4, 4') is ceramically impregnated;
- At the at least one fiber web (4, 4') sections (12) for a subsequent formation of the openings (13, 13') in the filter body (1) of the at least one fiber web (4, 4') are not impregnated ceramically or at least one fiber web (4, 4') will be provided with cut-outs (16) or coatings are applied to the at least one fiber web (4, 4') which prevent the ceramic impregnation; the flaps (46) will be cut out partially and bent-up from the plane of the fiber web (4, 4');
- The semi-finished product (17) is sintered under temperature in such a way that the fibers (5) of the at least one fiber web (4, 4') burn free and that the ceramic material (6) is sintered, the porous and gas-permeable filter walls (3) being formed between their two surfaces (7, 8) as well as the walls (45) of the gas channels (18, 18', 18", 18"') with the openings (13, 13').

13. Method according to claim 12, **characterized in that** the filter body (1) including the filter section (54) of the at least one swirl section (49, 50) and the plug (22, 22') is made in one-piece monolithically through sintering.

## Revendications

1. Filtre à particules diesel comprenant un corps de filtre en céramique (1) réalisé dans un matériau céramique (6) destiné à filtrer un flux de gaz d'échappement (2) d'un moteur diesel, le corps de filtre (1) présentant des canaux de gaz (18, 18') qui sont pourvus, dans une section filtrante (54), de parois filtrantes planes et poreuses (3), les parois filtrantes (3) étant prévues pour faire passer le flux de gaz d'échappement (2) en travers de leur surface, le corps de filtre (1) étant formé d'au moins d'une bande de fibres imprégnée de céramique (4, 4'), notamment de papier, formant ainsi les canaux de gaz (18, 18'), et étant fabriqué par frittage à haute température de sorte que des fibres (5) du matériau fibreux soient dénudées par brûlure et que le matériau céramique (6) soit aggloméré par frittage, générant ainsi les parois filtrantes (3) entièrement poreuses et perméables aux gaz entre ses deux surfaces (7, 8), les parois (45) des canaux de gaz (18, 18', 18", 18"') formées par la bande de fibres imprégnée de céramique (4, 4') présentant des ouvertures (13, 13') qui relient les canaux de gaz (18, 18') les uns aux autres de manière à guider le flux, des canaux de gaz adjacents (18, 18') étant obturés par des bouchons (22, 22'), notamment faits d'un matériau en céramique, en alternance d'un côté d'admission (33) de la section filtrante (54) et d'un côté d'échappement (34) de la section filtrante (54), la section filtrante (54) étant située, par rapport à un sens longitudinal (38) des canaux de gaz (18, 18'), entre les bouchons (22, 22') et les canaux de gaz (18, 18', 18", 18"') formant, par rapport à un sens longitudinal (38), hors de la section filtrante (54) au moins une section de tourbillonnement (49, 50) dans laquelle sont disposées les ouvertures (13), **caractérisé en ce qu'**au moins une paroi (45) est dotée dans le corps de filtre (1) de pattes relevées (46) destinées à former les ouvertures (13').

2. Filtre à particules diesel selon la revendication 1, **caractérisé en ce que** la section de tourbillonnement (49, 50), au moins au nombre d'une, est réalisée comme section catalytique (47, 48) destinée au nettoyage catalytique du flux de gaz d'échappement (2).

3. Filtre à particules diesel selon la revendication 2, **caractérisé en ce que** dans la zone de la section catalytique (47, 48), au moins au nombre d'une, pourvue d'ouvertures (13), les deux types de canaux de gaz adjacents (18, 18"; 18', 18"') présentent un revêtement catalytique.

4. Filtre à particules diesel selon la revendication 2 ou 3, **caractérisé en ce qu'**une section catalytique (48) côté sortie présente un revêtement avec substance d'accumulation de NOₓ (51).

5. Filtre à particules diesel selon l'une des revendications 1 à 4, **caractérisé en ce qu'**une section catalytique (47) côté entrée présente un revêtement de catalyseur oxydante (52) en vue de réduire la concentration de CO et/ou de HC dans le flux de gaz d'échappement (2).

6. Filtre à particules diesel selon l'une des revendications 1 à 5, **caractérisé en ce que** les ouvertures (13) situées dans le corps de filtre (1) sont formées par des sections non imprégnées de céramique (12) de la bande de fibres (4, 4'), au moins au nombre d'une.

7. Filtre à particules diesel selon l'une des revendications 1 à 6, **caractérisé en ce que** les ouvertures (13) situées dans le corps de filtre (1) sont formées par des découpes (16) dans la bande de fibres (4. 4'), au moins au nombre d'une.

8. Filtre à particules diesel selon l'une des revendications 1 à 7, **caractérisé en ce que** les ouvertures (13) situées dans le corps de filtre (1) sont formées par les revêtements repoussant l'imprégnation céramique sur la bande de fibres (4. 4'), au moins au nombre d'une.

9. Filtre à particules diesel selon l'une des revendications 1 à 8, **caractérisé en ce que** les ouvertures (13, 13') situées dans la section de tourbillonnement (49, 50), au moins au nombre d'une, sont disposées à une certaine distance de la section filtrante (54).

10. Filtre à particules diesel selon l'une des revendications 1 à 9, **caractérisé en ce que**, par rapport à un sens longitudinal (38) du corps de filtre (1), plusieurs ouvertures (13, 13') se suivent dans la section de tourbillonnement (49, 50).

11. Filtre à particules diesel selon l'une des revendications 1 à 10, **caractérisé en ce que** le corps de filtre (1), y compris la section filtrante (54), la section de tourbillonnement (49, 50), au moins au nombre d'une, et les bouchons (22, 22'), est réalisé par frittage de façon monolithique.

12. Procédure de fabrication d'un filtre à particules diesel, le filtre à particules diesel comprenant un corps de filtre en céramique (1) réalisé dans un matériau céramique (6) destiné à filtrer un flux de gaz d'échappement (2) d'un moteur diesel, le corps de filtre (1) présentant des canaux de gaz (18, 18', 18",18"') qui sont pourvus, dans une section filtrante (54), de parois filtrantes planes et poreuses (3), les parois filtrantes (3) étant prévues pour faire passer le flux de gaz d'échappement (2) en travers de leur surface, et les parois (45) des canaux de gaz (18, 18', 18", 18"') présentant des ouvertures (13, 13') qui relient les canaux de gaz (18, 18') les uns aux autres de manière à guider le flux, les ouvertures (13') dans le corps de filtre (1) étant formées de pattes relevées (46) d'au moins une paroi (45), comprenant les opérations suivantes:
- un produit intermédiaire (17) du corps de filtre (1) est formé à partir d'au moins une bande de fibres (4, 4'), notamment de papier, en formant ainsi les canaux de gaz (18, 18');
- la bande de fibres (4, 4'), au moins au nombre d'une, est imprégnée de céramique;
- en vue de générer ultérieurement les ouvertures (13, 13') dans le corps de filtre (1), des sections (12) ne sont pas imprégnées de céramique sur la bande de fibres (4, 4'), au moins au nombre d'une, ou bien la bande de fibres (4, 4'), au moins au nombre d'une, est pourvue de découpes (16) ou des revêtements repoussant l'imprégnation céramique sont appliqués sur la bande de fibres (4, 4'), au moins au nombre d'une; les pattes (46) sont en partie découpées et relevées d'un plan de la bande de fibres (4, 4');
- le produit intermédiaire (17) est fritté à haute température de sorte que des fibres (5) de la bande de fibres (4, 4'), au moins au nombre d'une, sont dénudées par brûlure, et que le matériau céramique (6) soit aggloméré par frittage, générant ainsi les parois filtrantes (3) entièrement poreuses et perméables aux gaz entre ses deux surfaces (7, 8), et les parois (45) des canaux de gaz (18, 18', 18", 18"') avec les ouvertures (13, 13').

13. Procédure selon la revendication 12, **caractérisée en ce que** le corps de filtre (1), y compris la section filtrante (54), la section de tourbillonnement (49, 50), au moins au nombre d'une, et les bouchons (22, 22'), est réalisé par frittage de façon monolithique.
